# EUROPEAN PATENT APPLICATION

(11) **EP 2 869 561 A1**
(43) Date of publication of application: **06.05.2015**
(21) Application number: 13810734.7
(22) Date of filing: 31.05.2013
(51) Int. Cl.: H04N 7/00

(54) **VIDEO ENCODING DEVICE, VIDEO DECODING DEVICE, VIDEO ENCODING METHOD, VIDEO DECODING METHOD, AND PROGRAM**

(30) Priority: 26.06.2012 JP 2012143441
(71) Applicant: NEC Corporation, Tokyo 108-8001 (JP)
(72) Inventor: CHONO, Keiichi, Tokyo 108-8001 (JP); AOKI, Hirofumi, Tokyo 108-8001 (JP)
(74) Representative: Vossius & Partner Patentanwälte Rechtsanwälte mbB
(86) International application number: PCT/JP2013/003459
(87) International publication number: WO 2014/002386

(57) **Abstract**

A video encoding device includes a transformer for transforming an image block, an entropy encoder (103) for entropy encoding transformed data of the image block transformed by the transformer, a PCM encoder (1070) for PCM encoding the image block, and a multiplexed data selector (109) for selecting output data of any one of the entropy encoder (103) and the PCM encoder (1070) for each image block. The PCM encoder (1070) embeds, at the beginning of PCM data, a subsequent_pcm_flag syntax indicating whether an image block of PCM data follows or not.

## Description

### Technical Field

The present invention relates to a video encoding device and a video decoding device which use PCM encoding.

### Background Art

Non Patent Literature 1 discloses a general video encoding technology based on a transformation encoding technology, a prediction encoding technology, and an entropy encoding technology.

As an example of a block type on which frequency transform and entropy encoding processing are not performed, there is pulse code modulation (PCM). The block type refers to a type of encoding used in a block (intra-prediction, inter-prediction, and PCM).

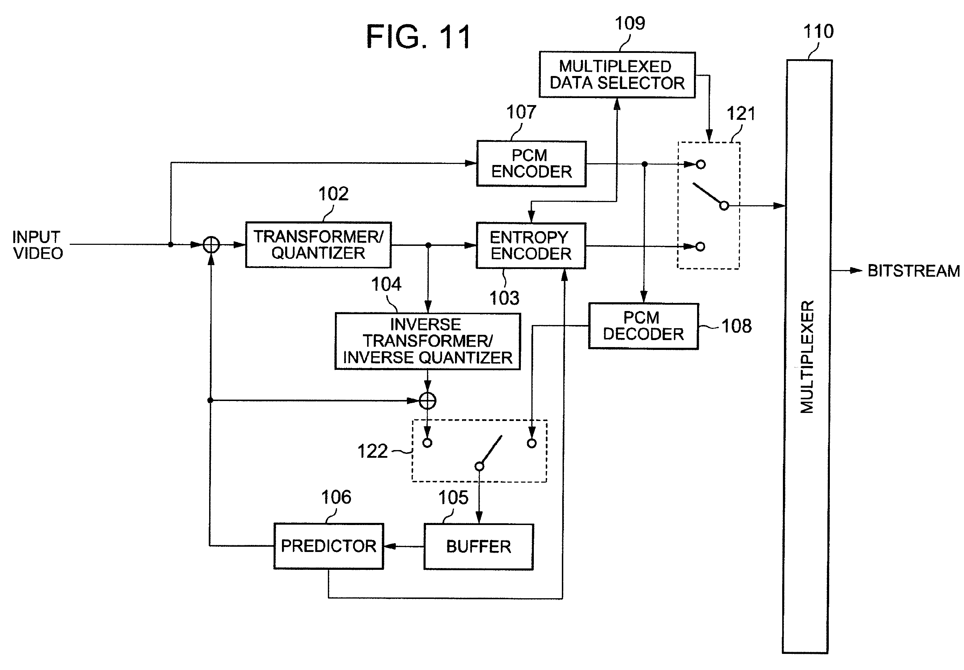

A video encoding device described in NPL 1 is configured as illustrated in Fig. 11. Hereinafter, the video encoding device illustrated in Fig. 11 is referred to as a general video encoding device.

A configuration and operation of the general video encoding device which receives respective frames of a digitized video and outputs a bitstream will be described with reference to Fig. 11.

The video encoding device illustrated in Fig. 11 includes a transformer/quantizer 102, an entropy encoder 103, an inverse transformer/inverse quantizer 104, a buffer 105, a predictor 106, a PCM encoder 107, a PCM decoder 108, a multiplexed data selector 109, a multiplexer 110, a switch 121, and a switch 122.

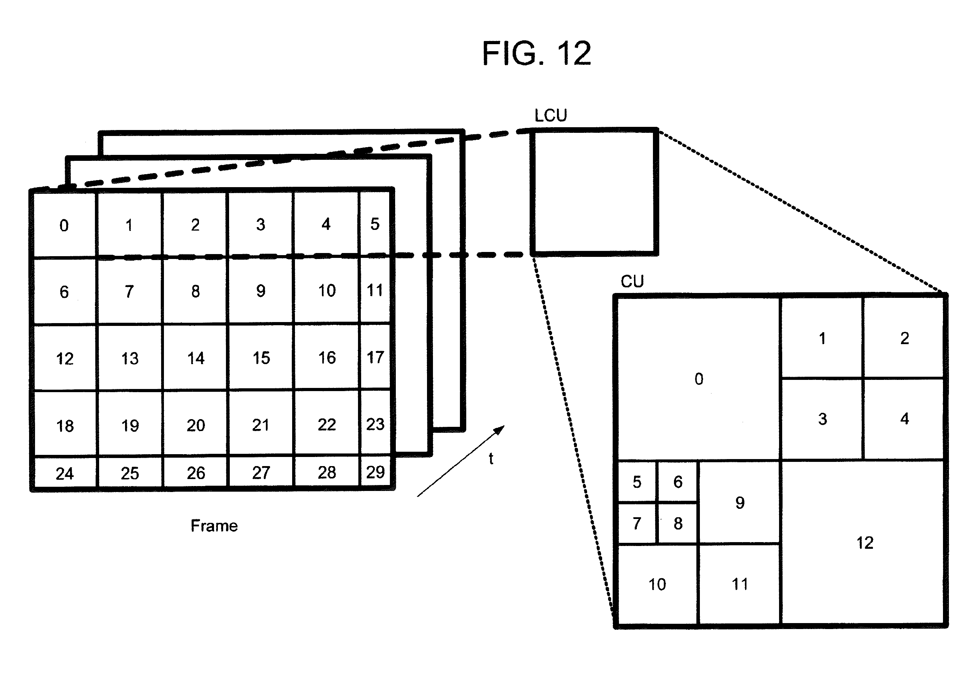

As illustrated in Fig. 12, a frame is made up of largest coding units (LCUs). An LCU is made up of coding units (CUs).

The video encoding device illustrated in Fig. 11 encodes the LCUs in a raster scanning order and encodes the CUs constituting the LCU in a z-scanning order. A size of a CU is any of 64 × 64, 32 × 32, 16 × 16, and 8 × 8. The smallest CU is referred to as a smallest coding unit (SCU).

An input video of a CU is subjected to a process of subtracting a predicted signal supplied from the predictor 106 therefrom, and is input to the transformer/quantizer 102. As prediction, there are two types including intra-prediction and inter-frame prediction. Each type of prediction will be described. In the intra-prediction, a predicted signal is generated based on an image of a reconstructed picture, of which the display time point is identical to that of a current picture stored in the buffer 105. Hereinafter, a CU using the intra-prediction is referred to as an intra-CU.

In the inter-frame prediction, a predicted signal is generated based on an image of a reconstructed picture (reference picture), of which the display time point is different from that of a current picture stored in the buffer 105. Hereinafter, a CU using the inter-frame prediction is referred to as an inter-CU.

A picture encoded to include only intra-CUs is referred to an I picture. A picture encoded to include not only an intra-CU but also an inter-CU using one reference picture upon the inter-frame prediction is referred to as a P picture. A picture encoded to include an inter-CU using two reference pictures simultaneously upon the inter-frame prediction is referred to as a B picture.

The transformer/quantizer 102 frequency-transforms an image (prediction error image) from which a predicted signal is subtracted and calculates a frequency transform coefficient of the prediction error image.

In addition, the transformer/quantizer 102 quantizes the frequency transform coefficient at a predetermined quantization step width Qs. Hereinafter, the quantized frequency transform coefficient is referred to as a coefficient quantization value or a quantization level value.

The entropy encoder 103 entropy encodes a prediction parameter and the quantization level value. The prediction parameter is information related to the above-described prediction types (intra-prediction and inter-prediction) and information of prediction units (PUs) included in a CU.

The inverse transformer/inverse quantizer 104 inverse-quantizes the quantization level value at the quantization step width Qs. In addition, the inverse transformer/inverse quantizer 104 inverse-frequency-transforms the inverse-quantized frequency transform coefficient. The inverse-frequency-transformed reconstructed prediction error image is subjected to a process of adding a predicted signal thereto and is supplied to the switch 122.

The multiplexed data selector 109 monitors the amount of input data of the entropy encoder 103 corresponding to a CU to be encoded. In a case where the entropy encoder 103 is capable of entropy encoding the input data within a CU processing period, the multiplexed data selector 109 selects output data of the entropy encoder 103 and supplies the output data to the multiplexer 110 through the switch 121. In addition, the multiplexed data selector 109 selects output data of the inverse transformer/inverse quantizer 104 and supplies the output data to the buffer 105 through the switch 122.

In a case where entropy encoding is not capable of being performed within the CU processing period, the multiplexed data selector 109 selects output data of the PCM encoder 107 and supplies the output data to the multiplexer 110 through the switch 121. In addition, the multiplexed data selector 109 selects output data obtained when the PCM decoder 108 PCM decodes output data of the PCM encoder 107, and supplies the output data to the buffer 105 through the switch 122.

The buffer 105 stores the reconstructed image supplied through the switch 122. The reconstructed image corresponding to one frame is referred to as a reconstructed picture.

The multiplexer 110 multiplexes the output data of the entropy encoder 103 and the output data of the PCM encoder 107 and outputs the output data.

Based on the above-described operation, the multiplexer 110 in the video encoding device generates a bitstream.

### Citation List

### Non Patent Literature

NPL 1: Benjamin Bross, Woo-Jin Han, Jens-Rainer Ohm, Gary J. Sullivan, and Thomas Wiegand, "WD4: Working Draft 4 of High-Efficiency Video Coding", JCTVC-F803_d1, Joint Collaborative Team on Video Coding (JCT-VC) of ITU-T SG16 WP3 and ISO/IEC JTC1/SC29/WG11 6th Meeting: Torino, IT, 14-22 July, 2011

### Summary of Invention

### Technical Problem

In the video encoding device illustrated in Fig. 11, when a CU is encoded in a PCM mode, a block header thereof is entropy encoded. That is, in the case of transmitting the block header of the PCM mode (PCM mode header), it is necessary to perform two processes including a process of outputting non-output symbols of an encoding engine of the entropy encoder 103 and a process of resetting the encoding engine. Furthermore, the block header of the PCM mode is generally made up of split information of a CU (split_coding_unit_flag syntax), a prediction type of a CU (skip_flag syntax, pred_mode_flag syntax, and pred_mode syntax), a PCM flag of a PU (pcm_flag syntax), and the like.

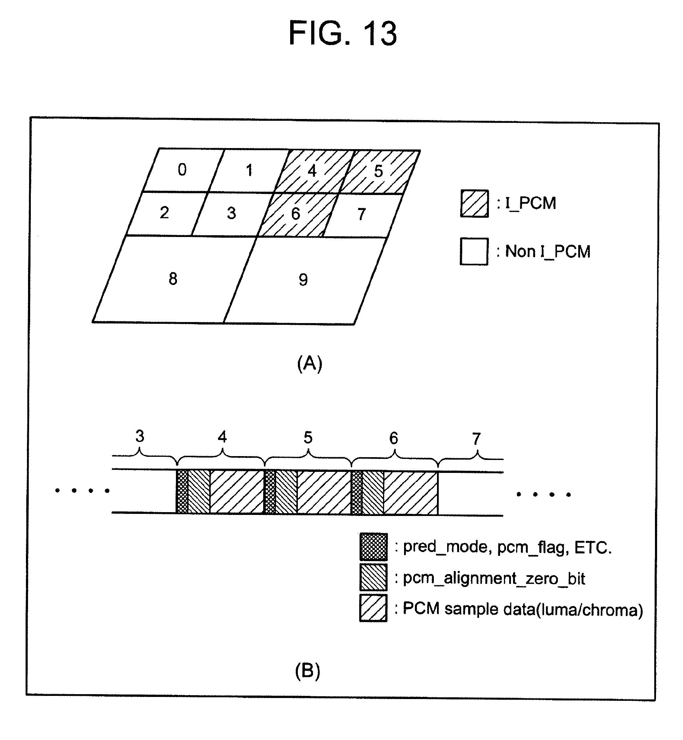

Encoding of successive PCM mode image blocks will be described with reference to Fig. 13. As illustrated in Fig. 13(A), it is assumed that, in an LCU to be encoded, CUs of 4, 5 and 6 (CU(4), CU(5) and CU(6)) which are successive in an encoding order are blocks (I_PCM) to be PCM encoded, and remaining CUs are blocks (Non_I_PCM) to be intra-prediction/inter-prediction encoded. As illustrated in Fig. 13(B), a bitstream corresponding to a CU(3) (Non_I_PCM), the CU(4) (I_PCM), the CU(5) (I_PCM), the CU(6) (I_PCM), and a CU(7) (Non_I_PCM) includes a video bitstream of the CU(3)/CU(7) which are entropy encoded, a video bitstream of PCM mode headers of the CU(4)/CU(5)/CU(6), alignment data (pcm_alignment_zero_bit) of CU(4)/CU(5)/CU(6) which are non-entropy encoded, and PCM data (PCM sample data).

Since entropy encoding is performed on the PCM mode headers of the successive CU(4)/CU(5)/CU(6) of I_PCM, the process of outputting non-output symbols of the above-described encoding engine and the process of resetting the encoding engine are repeatedly performed. Therefore, although the CU(4)/CU(5)/CU(6) are successive I_PCM, it is necessary to wait for completion of the process of outputting non-output symbols of the above-described encoding engine and the process of resetting the encoding engine for the PCM mode headers before the PCM data of the CUs is multiplexed into a bitstream. In the general technology, there is a problem that it is impossible to multiplex the PCM data of successive PCM mode image blocks with high efficiency, that is, to transmit the PCM data of successive PCM mode image blocks with high efficiency.

An object of the present invention is to provide a video encoding device, a video decoding device, a video encoding method, a video decoding method, and a video encoding program, and a video decoding program which, even when PCM mode image blocks are generated successively, allow for efficient transmission of the PCM data thereof.

### Solution to Problem

A video encoding device according to the present invention includes: a transforming means for transforming an image block; an entropy encoding means for entropy encoding transformed data of the image block transformed by the transforming means; a PCM encoding means for PCM encoding the image block; and a multiplexed data selecting means for selecting any of output data of the entropy encoding means and output data of the PCM encoding means for each image block, wherein the PCM encoding means embeds, at a beginning of PCM data, a subsequent_pcm_flag syntax indicating whether an image block of PCM data follows or not.

A video decoding device according to the present invention includes: a demultiplexing means for demultiplexing a bitstream including a subsequent_pcm_flag syntax indicating whether an image block of PCM data follows or not; a PCM decoding means for PCM decoding the PCM data of the image block included in the bitstream; an entropy decoding means for entropy decoding transformed data of the image block included in the bitstream; and a decoding control means for, when a value of a subsequent_pcm_flag syntax of an image block immediately before an image block to be decoded is equal to 1, inhibiting the entropy decoding means from entropy decoding a PCM mode header of the image block to be decoded.

A video encoding method according to the present invention includes: transforming an image block, and entropy encoding transformed data of the transformed image block; PCM encoding the image block by embedding, at a beginning of PCM data, a subsequent_pcm_flag syntax indicating whether an image block of PCM data follows or not; and selecting any of entropy encoded output data and PCM encoded output data for each image block.

A video decoding method according to the present invention includes: demultiplexing a bitstream including a subsequent_pcm_flag syntax indicating whether an image block of PCM data follows or not; PCM decoding the PCM data of the image block included in the bitstream; entropy decoding transformed data of the image block included in the bitstream; and, when a value of a subsequent_pcm_flag syntax of an image block immediately before an image block to be decoded is equal to 1 upon the entropy decoding, inhibiting entropy-decoding a PCM mode header of the image block to be decoded.

A video encoding program according to the present invention causes a computer to perform: a transformation process of transforming an image block; an entropy encoding process of entropy encoding transformed data of the image block transformed in the transformation process; a PCM encoding process of PCM encoding the image block; and a multiplexed data selection process of selecting any of output data generated in the entropy encoding process and output data generated in the PCM encoding process, for each image block, wherein, in the PCM encoding process, a subsequent_pcm_flag syntax indicating whether an image block of PCM data follows or not is embedded at a beginning of PCM data.

A video decoding program according to the present invention causes a computer to perform: a demultiplexing process of demultiplexing a bitstream including a subsequent_pcm_flag syntax indicating whether an image block of PCM data follows or not; a PCM decoding process of PCM decoding the PCM data of the image block included in the bitstream; an entropy decoding process of entropy decoding transformed data of the image block included in the bitstream; and a decoding control process of, when a value of a subsequent_pcm_flag syntax of an image block immediately before an image block to be decoded is equal to 1, inhibiting the PCM decoding process from entropy decoding a PCM mode header of the image block to be decoded.

### Advantageous Effects of Invention

The video encoding device using the present invention can transmit PCM data of PCM mode image blocks with high efficiency even when the PCM mode image blocks are generated successively.

### Brief Description of Drawings

[Fig. 1] It depicts a block diagram illustrating a configuration example of a video encoding device of a first exemplary embodiment according to the present invention.
[Fig. 2] It depicts an explanatory diagram illustrating an example of a bitstream output from a multiplexer.
[Fig. 3] It depicts a flowchart illustrating an operation example of the video encoding device of the first exemplary embodiment.
[Fig. 4] It depicts a block diagram illustrating a configuration example of a video decoding device of a second exemplary embodiment according to the present invention.
[Fig. 5] It depicts a flowchart illustrating an operation example of the video decoding device of the second exemplary embodiment.
[Fig. 6] It depicts an explanatory diagram illustrating an example of syntax.
[Fig. 7] It depicts an explanatory diagram illustrating another example of syntax.
[Fig. 8] it depicts a block diagram illustrating a configuration example of an information processing system capable of realizing functions of a video encoding device and a video decoding device according to the present invention.
[Fig. 9] It depicts a block diagram illustrating main elements of a video encoding device according to the present invention.
[Fig. 10] It depicts a block diagram illustrating main elements of a video decoding device according to the present invention.
[Fig. 11] It depicts a block diagram illustrating a configuration of a general video encoding device.
[Fig. 12] It depicts an explanatory diagram illustrating a configuration example of a frame.
[Fig. 13] It depicts an explanatory diagram illustrating an example of a bitstream output from a multiplexer in a general video encoding device.

### Description of Embodiments

The video encoding device according to the present invention does not embed a PCM mode header, which is entropy encoded, between PCM data of successive PCM mode image blocks, so as not to repeatedly perform a process of outputting non-output symbols and a process of resetting an encoding engine, at the time of encoding of the successive PCM mode image blocks. Instead of non-embedment of the PCM mode header, the video encoding device according to the present invention arranges, at the beginning of each piece of PCM data, a combination of a subsequent_pcm_flag syntax indicating whether there is PCM data of a next image block, and a pcm_alignment_zero_bit syntax for byte alignment of a PCM data write start address, between the PCM data of the successive PCM mode image blocks. Furthermore, as described below, the subsequent_pcm_flag syntax and the pcm_alignment_zero_bit syntax are non-entropy encoded.

### Exemplary Embodiment 1.

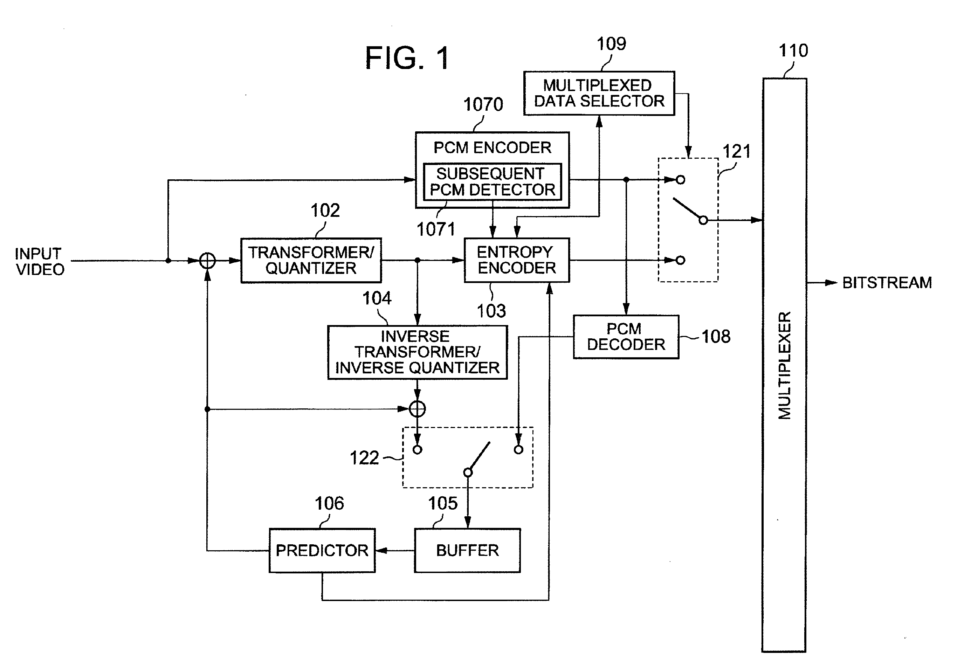

Fig. 1 depicts a block diagram illustrating a video encoding device of a first exemplary embodiment. The video encoding device of the present exemplary embodiment includes a PCM encoder 1070 having a configuration different from that of the video encoding device illustrated in Fig. 11. The PCM encoder 1070 in the present exemplary embodiment includes a subsequent PCM detector 1071 that detects whether there is a PCM mode image block subsequent to a PCM mode image block to be encoded, unlike the PCM encoder 107 illustrated in Fig. 11. Furthermore, although the subsequent PCM detector 1071 is illustrated as being present within the PCM encoder 1070 in Fig. 1, this is not necessarily required. The subsequent PCM detector 1071 may be provided at a portion other than the PCM encoder 1070 (for example, multiplexed data selector 109) or may be provided independently from respective elements illustrated in Fig. 1.

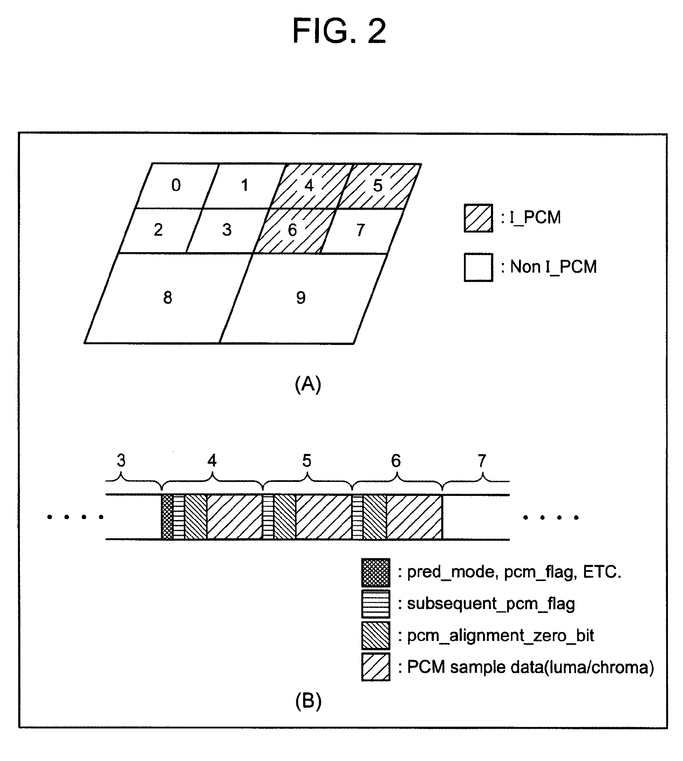

The video encoding device of the present exemplary embodiment is assumed to be directed to PCM mode image blocks having the same block size which are successive in a transmission order in each LCU, and transmit the PCM mode image blocks. Also, in the present exemplary embodiment, as illustrated in Fig. 2(A) (same as in Fig. 13(A)), it is assumed that a CU(4), a CU(5), and a CU(6), which are successive in an encoding order, are blocks (I_PCM) that are PCM encoded, and the remaining CUs are blocks (Non_I_PCM) that are intra-prediction/inter-prediction encoded.

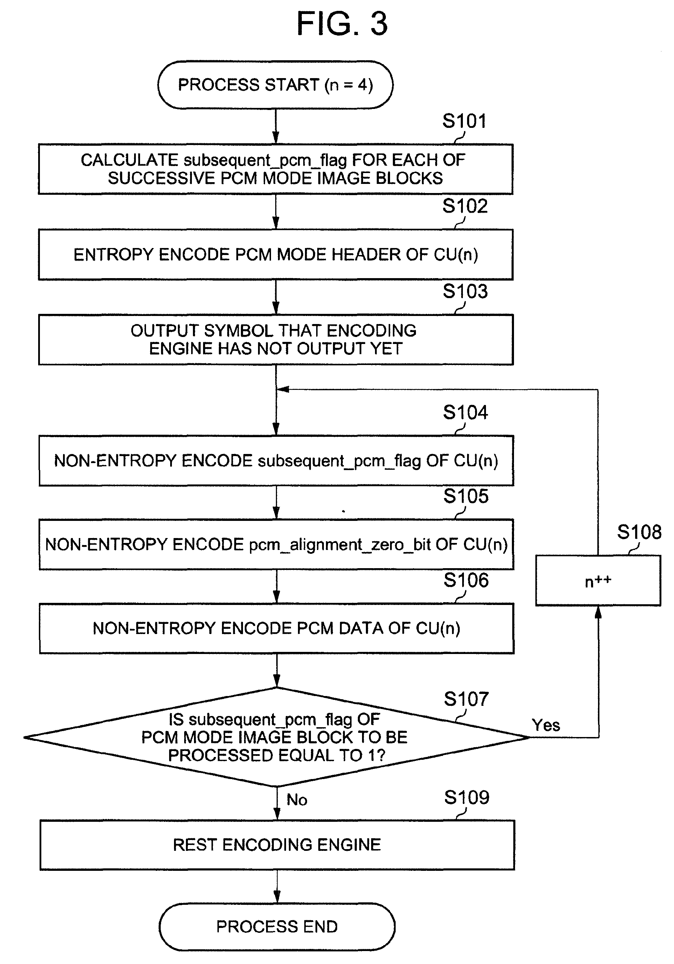

An operation of the video encoding device will be described with reference to Fig. 3 by taking, as examples, the CU(4), CU(5) and CU(6) which are the PCM mode image blocks of Fig. 2(A).

The video encoding device of the present exemplary embodiment operates as illustrated in a flowchart of Fig. 3. That is, in step S101, the subsequent PCM detector 1071 detects whether an image block subsequent to each PCM mode image block is the PCM mode. When the image block is the PCM mode, the subsequent_pcm_flag syntax is set to 1. Otherwise, the subsequent_pcm_flag syntax is set to 0. In the case of using the example illustrated in Fig. 13(A), values of the subsequent_pcm_flag of the CU(4) and the CU(5) become equal to 1, and a value of the subsequent_pcm_flag of the CU(6) becomes equal to 0. Furthermore, when the image block is not the PCM mode, the value of the subsequent_pcm_flag is defined as 0.

In step S102, the entropy encoder 103 entropy encodes a PCM mode header of the CU(4) that is a first PCM mode image block.

Subsequently, in step S103, the entropy encoder 103 outputs a symbol which has not been output yet.

In step S104, the PCM encoder 1070 non-entropy encodes the subsequent_pcm_flag syntax of a CU(n).

Subsequently, in step S105, the PCM encoder 1070 non-entropy encodes the pcm_alignment_zero_bit syntax of the CU(n). That is, a write start address of PCM data of the CU(n) is byte-aligned.

Furthermore, in order to prevent a start code from becoming equal to 0 in the 8-bit combination of the subsequent_pcm_flag syntax and the pcm_alignment_zero_bit syntax, the pcm_alignment_one_bit that always has a value of 1 may be used instead of the pcm_alignment_zero_bit syntax.

In addition, in step S106, the PCM encoder 1070 non-entropy encodes the PCM data of the CU(n).

In step S107, the multiplexed data selector 109 determines whether the subsequent_pcm_flag syntax of the CU(n) is equal to 1. When the subsequent_pcm_flag syntax of the CU(n) is equal to 1, the process proceeds to step S108, that is, the process increments n and proceeds to encoding of a next PCM mode image block. When the subsequent_pcm_flag syntax of the CU(n) is equal to 0, the process proceeds to step S109.

In step S109, the entropy encoder 103 resets an encoding engine thereof. Then, the process proceeds to encoding of a next image block.

The multiplexer 110 outputs a bitstream obtained by multiplexing the data encoded by the PCM encoder 1070 and the data encoded by the entropy encoder 103.

The description of the operation of the video encoding device of the present exemplary embodiment is hereby ended.

As illustrated in Fig. 2(B), it is known that a PCM mode header, which is entropy encoded, is not embedded between PCM data of successive PCM mode image blocks by the operation of the video encoding device of the above-described present exemplary embodiment. Instead, it is known that the combination (total 8 bits) of the subsequent_pcm_flag syntax and the pcm_alignment_zero_bit syntax is arranged at the beginning of each piece of PCM data, between the PCM data of the successive PCM mode image blocks. Since the number of bits of one piece of PCM data necessarily becomes the multiple of 8 bits, the start position of the subsequent_pcm_flag syntax also necessarily becomes the multiple of 8 bits. That is, the subsequent_pcm_flag syntax, the PCM data, and the start position of each piece of first entropy encoded data necessarily become a byte-aligned address.

Like the PCM data, the subsequent_pcm_flag syntax and the pcm_alignment_zero_bit syntax, which are arranged between the PCM data of the successive PCM mode image blocks, are non-entropy encoded. Therefore, when the PCM data of the PCM mode image blocks subsequent to a first PCM mode image block is multiplexed into a bitstream, it is not necessary to wait for completion of the process of outputting non-output symbols of the above-described encoding engine and the process of resetting the encoding engine. Therefore, the video encoding device of the present exemplary embodiment can multiplex the PCM data of the successive PCM mode image blocks into a bitstream with high efficiency. That is, it is possible to transmit the PCM data of the successive PCM mode image blocks with high efficiency.

### Exemplary Embodiment 2.

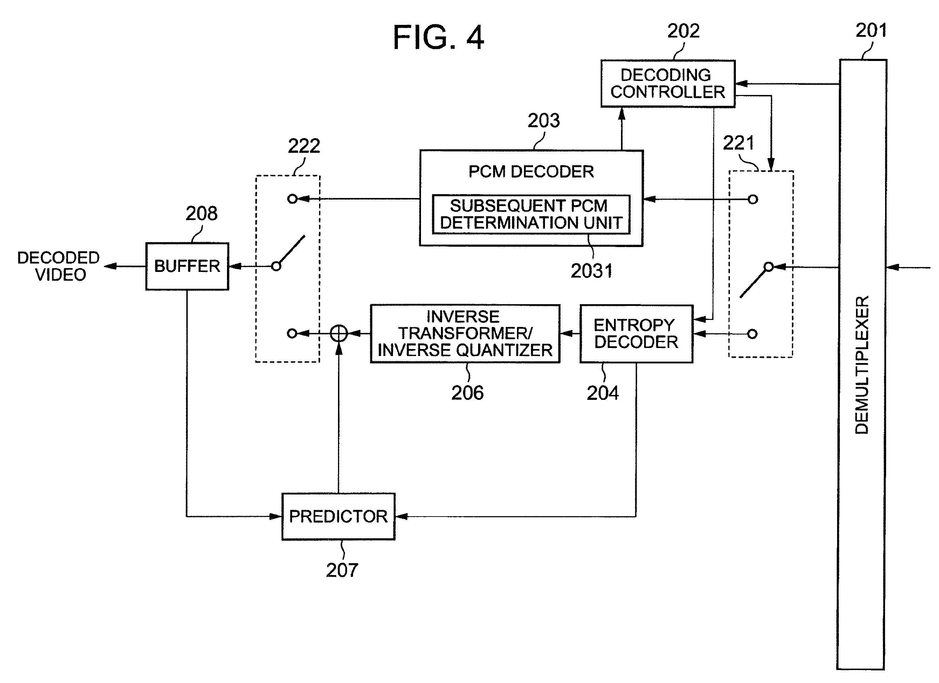

Fig. 4 depicts a block diagram illustrating a video decoding device corresponding to the video encoding device of the first exemplary embodiment. The video decoding device of the present exemplary embodiment includes a demultiplexer 201, a decoding controller 202, a PCM decoder 203, an entropy decoder 204, an inverse transformer/inverse quantizer 206, a predictor 207, a buffer 208, and switches 221 and 222.

The PCM decoder 203 includes a subsequent PCM determination unit 2031 that determines whether a CU to be currently decoded is subsequent to a most recently decoded CU of the PCM mode. Furthermore, although the subsequent PCM determination unit 2031 is illustrated as being present within the PCM decoder 203, this is not necessarily required. The subsequent PCM determination unit 2031 may be provided at a portion other than the PCM decoder 203 (for example, decoding controller 202) or may be provided independently from respective elements illustrated in Fig. 4.

The demultiplexer 201 demultiplexes an input bitstream and extracts a video bitstream.

When the most recently decoded CU is the PCM mode and the subsequent_pcm_flag thereof is equal to 1 (that is, when the subsequent PCM determination unit 2031 determines that a CU to be currently decoded is subsequent to the most recently decoded CU of the PCM mode), the decoding controller 202 allows the entropy decoder 204 not to entropy decode a CU/PU header of the CU to be currently decoded. The decoding controller 202 reads, from the video bitstream, the subsequent_pcm_flag syntax and the pcm_alignment_zero_bit syntax of the CU of PCM mode to be decoded, and supplies subsequent PCM data to the PCM decoder 203. The PCM decoder 203 reads and PCM decodes the supplied PCM data. The decoding controller 202 switches the switch 222 to supply a reconstructed image supplied from the PCM decoder 203 to the buffer 208. When the read subsequent_pcm_flag syntax is equal to 0, the decoding controller 202 resets a decoding engine of the entropy decoder 204. Then, the process proceeds to decoding of a next CU. Furthermore, in order to decode subsequent CUs, the decoding controller 202 stores a value of the current subsequent_pcm_flag.

In other cases (a case where the most recently decoded CU is the PCM mode and the subsequent_pcm_flag thereof is equal to 0, or a case where the most recently decoded CU is not the PCM mode), the decoding controller 202 allows the entropy decoder 204 to entropy decode the CU/PU header of the CU to be decoded.

When the entropy decoder 204 entropy decodes the pcm_flag having a value of 1, the decoding controller 202 reads the subsequent_pcm_flag syntax and the pcm_alignment_zero_bit syntax of the CU of PCM mode to be decoded from the video bitstream and supplies subsequent PCM data to the PCM decoder 203. The PCM decoder 203 reads and PCM decodes the supplied PCM data. The decoding controller 202 switches the switch 222 to supply a reconstructed image supplied from the PCM decoder 203 to the buffer 208. When the read subsequent_pcm_flag syntax is equal to 0, the decoding controller 202 resets the decoding engine of the entropy decoder 204. Then, the process proceeds to decoding of a next CU.

When the entropy decoder 204 entropy decodes the pcm_flag having a value of 0, or when the pcm_flag is not present, the entropy decoder 204 also entropy decodes a prediction parameter and a quantization level value of the CU to be decoded and supplies the prediction parameter and the quantization level value to the inverse transformer/inverse quantizer 206 and the predictor 207.

The inverse transformer/inverse quantizer 206 inverse-quantizes the quantization level value and also inverse-frequency-transforms an inverse-quantized frequency transform coefficient.

After the inverse frequency transformation, the predictor 207 generates a predicted signal by using the image of the reconstructed picture stored in the buffer 208, based on the entropy-decoded prediction parameter. After the generation of the predicted signal, a reconstructed prediction error image which is inverse-frequency-transformed by the inverse transformer/inverse quantizer 206 is subjected to a process of adding the predicted signal supplied from the predictor 207 thereto and is supplied to the switch 222. After the addition of the predicted signal, the decoding controller 202 switches the switch 222 to supply the reconstructed prediction error image, to which the predicted signal is added, to the buffer 208 as a reconstructed image. Then, the process proceeds to decoding of a next CU.

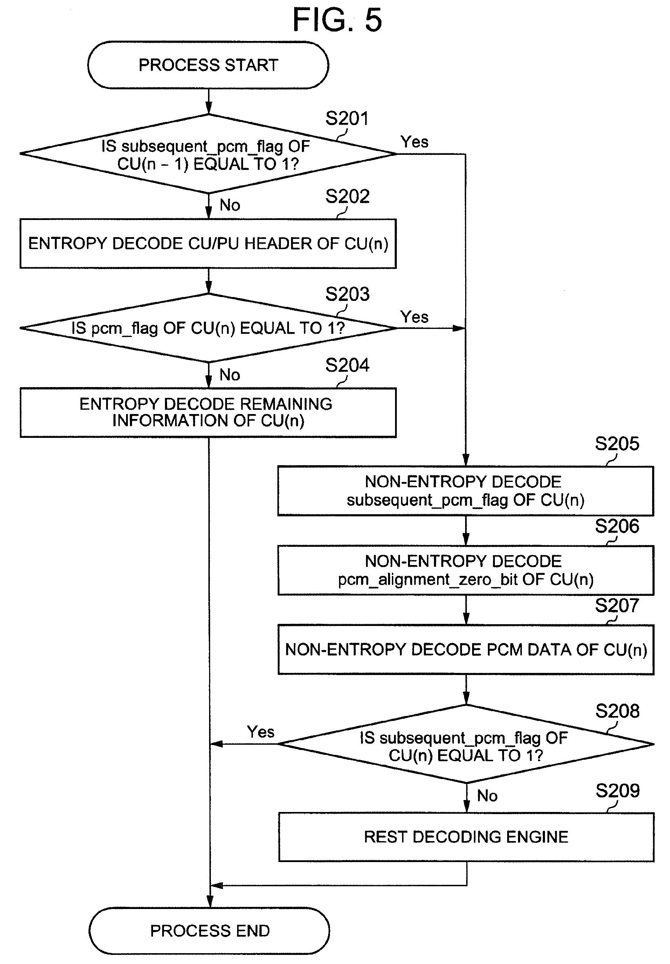

An operation of the video decoding device of the present exemplary embodiment will be described with reference to a flowchart of Fig. 5.

In step S201, the subsequent PCM determination unit 2031 determines whether a most recently decoded CU(n - 1) is the PCM mode and a subsequent_pcm_flag thereof is equal to 1. When the most recently decoded CU is the PCM mode and the subsequent_pcm_flag thereof is equal to 1, the process proceeds to step S205. Furthermore, when the most recently decoded CU is not the PCM mode, a value of the subsequent_pcm_flag is defined as 0, and thus the subsequent PCM determination unit 2031 may determine only whether the subsequent_pcm_flag of the most recently decoded CU(n - 1) is equal to 1.

In step S202, the entropy decoder 204 entropy decodes a CU/PU header of the CU(n) to be decoded.

In step S203, the decoding controller 202 determines whether the pcm_flag having a value of 1 is entropy decoded. When the pcm_flag having the value of 1 is entropy decoded, the process proceeds to step S205.

In step S204, the entropy decoder 204 entropy decodes the prediction parameter and the quantization level value of the CU(n) to be decoded. As described above, the reconstructed image of the CU(n) is obtained based on the prediction parameter and the quantization level value and decoding processing for the CU(n) is ended.

In step S205, the decoding controller 202 reads the subsequent_pcm_flag syntax of the CU(n) of PCM mode to be decoded from the video bitstream. Furthermore, the PCM decoder 203 may perform reading of the subsequent_pcm_flag syntax that is non-entropy encoded.

In step S206, the decoding controller 202 reads the pcm_alignment_zero_bit syntax of the CU(n) of PCM mode to be decoded from the video bitstream. Furthermore, the PCM decoder 203 may perform reading of the pcm_alignment_zero_bit syntax that is non-entropy encoded.

In step S207, the decoding controller 202 reads the PCM data of the CU(n) of PCM mode to be decoded from the video bitstream. Furthermore, the PCM decoder 203 may perform reading of the PCM data that is non-entropy encoded. As described above, the reconstructed image of the CU(n) is obtained based on the PCM data.

In step S208, the decoding controller 202 determines whether the subsequent_pcm_flag syntax of the CU(n) is equal to 1. When the subsequent_pcm_flag syntax of the CU(n) is equal to 1, decoding processing for the CU(n) is ended.

In step S209, the entropy decoder 204 resets the decoding engine thereof. Then, decoding processing for the CU(n) is ended.

The description of the operation of the video decoding device of the present exemplary embodiment is hereby ended.

According to the operation of the video decoding apparatus of the present exemplary embodiment described above, it is not necessary to wait for completion of the process of resetting the decoding engine at the time of reading PCM data of PCM mode image blocks subsequent to a first PCM mode image block from a bitstream. Therefore, the video decoding device of the present exemplary embodiment reads the PCM data of the successive PCM mode image blocks from the bitstream with high efficiency. That is, the PCM data of the successive PCM mode image blocks can be received with high efficiency.

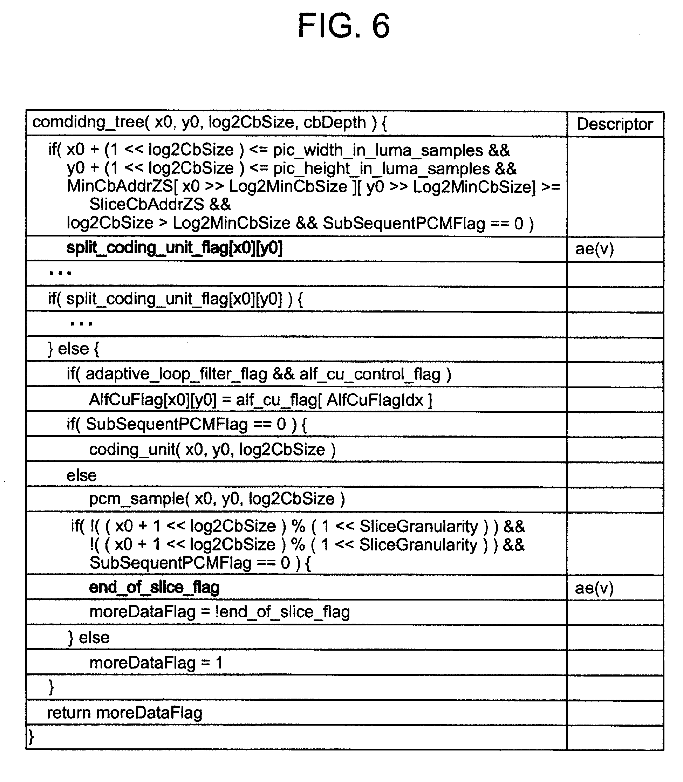

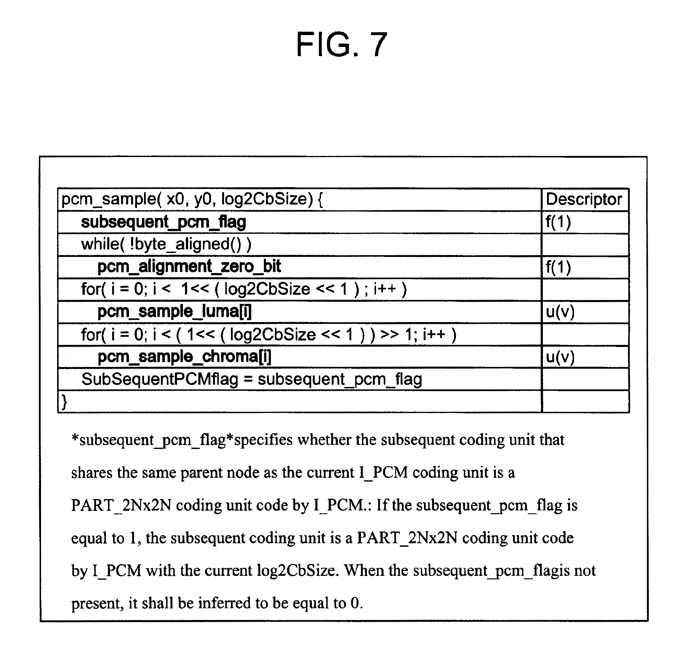

Furthermore, a Coding tree syntax and a Pcm sample syntax are respectively illustrated in Fig. 6 and Fig. 7, corresponding to the above exemplary embodiments. It is known with reference to Fig. 6 and Fig. 7 that, when a variable SubSequentPCMFlag in which a value of the subsequent_pcm_flag syntax of an immediately previous CU is stored is equal to 1, a block header of a PCM mode (split_coding_unit_flag syntax, syntax subsequent to coding_unit(), and the like) is not entropy encoded. That is, it is known that, when PCM data of CUs of PCM mode subsequent to a first CU of PCM mode is read from the bitstream, it is not necessary to reset the decoding engine.

Furthermore, although the above exemplary embodiments can be configured by hardware, it is also possible to realize the above exemplary embodiments by a computer program.

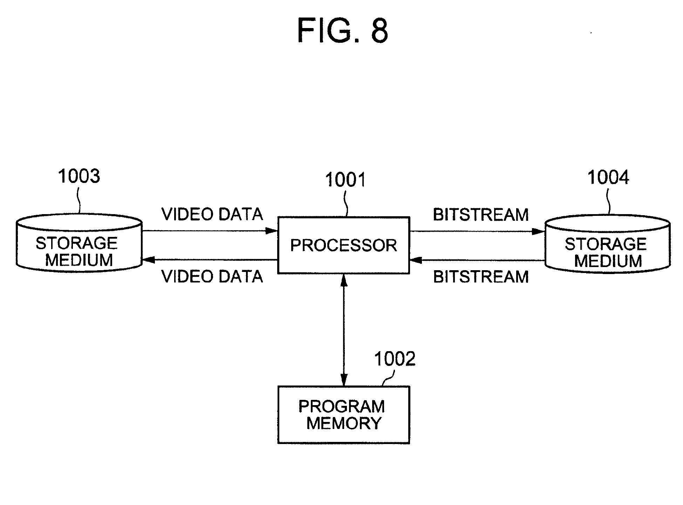

An information processing system illustrated in Fig. 8 includes a processor 1001, a program memory 1002, a storage medium 1003 for storing video data, and a storage medium 1004 for storing a bitstream. The storage mediums 1003 and 1004 may be separate storage mediums or may be storage areas configured by the same storage medium. As the storage medium, a magnetic storage medium, such as a hard disk, can be used.

In the information processing system illustrated in Fig. 8, the program memory 1002 stores programs for realizing functions of the respective blocks illustrated in Fig. 1 and Fig. 4. Then, the processor 1001 realizes functions of the video encoding device or the video decoding device respectively illustrated in Fig. 1 and Fig. 4 by performing processing according to the programs stored in the program memory 1002.

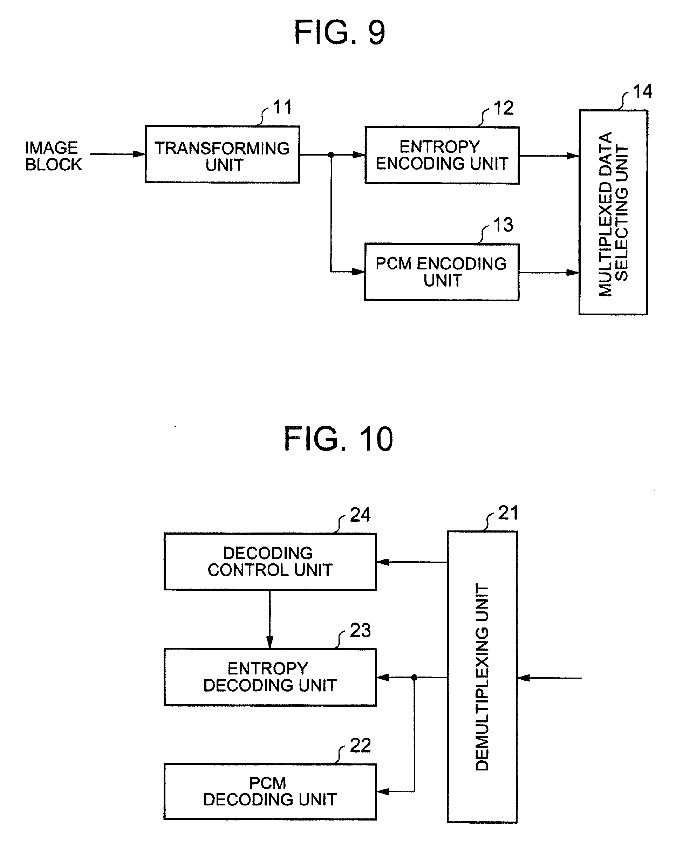

Fig. 9 depicts a block diagram illustrating main elements of a video encoding device according to the present invention. As illustrated in Fig. 9, the video encoding device according to the present invention includes a transforming unit 11 for transforming an image block, an entropy encoding unit 12 for entropy encoding transformed data of the image block transformed by the transforming unit 11, a PCM encoding unit 13 for PCM encoding the image block, and a multiplexed data selecting unit 14 for selecting output data of any one of the entropy encoding unit 12 and the PCM encoding unit 13 for each image block, wherein the PCM encoding unit 13 embeds, at the beginning of PCM data, a subsequent_pcm_flag syntax indicating whether there is PCM data of a next image block.

Fig. 10 depicts a block diagram illustrating main elements of a video decoding device according to the present invention. As illustrated in Fig. 10, the video decoding device according to the present invention includes a demultiplexing unit 21 for demultiplexing a bitstream including a subsequent_pcm_flag syntax indicating whether there is PCM data of a next image block, a PCM decoding unit 22 for PCM decoding the PCM data of the image block included in the bitstream, an entropy decoding unit 23 for entropy decoding transformed data of the image block included in the bitstream, and a decoding control unit 24 for, when a value of a subsequent_pcm_flag syntax of an image block immediately before an image block to be decoded is equal to 1, allowing a PCM mode header of the image block to be decoded not to be entropy decoded.

Although the present invention has been described with reference to the above exemplary embodiments and examples, the present invention is not limited to the above exemplary embodiments and examples. Various changes understandable by those skilled in the art can be made to the configurations and details of the present invention within the scope of the present invention.

The present application claims priority based upon Japanese Patent Application No. 2012-143441, filed on June 26, 2012, the entire contents of which is incorporated herein by reference.

### Reference Signs List

- 11: transforming unit
- 12: entropy encoding unit
- 13: pcm encoding unit
- 14: multiplexed data selecting unit
- 21: demultiplexing unit
- 22: pcm decoding unit
- 23: entropy decoding unit
- 24: decoding control unit
- 102: transformer/quantizer
- 103: entropy encoder
- 104: inverse transformer/inverse quantizer
- 105: buffer
- 106: predictor
- 107: pcm encoder
- 108: pcm decoder
- 109: multiplexed data selector
- 110: multiplexer
- 121: switch
- 122: switch
- 201: demultiplexer
- 202: decoding controller
- 203: pcm decoder
- 204: entropy decoder
- 206: inverse transformer/inverse quantizer
- 207: predictor
- 208: buffer
- 221: switch
- 222: switch
- 1001: processor
- 1002: program memory
- 1003: storage medium
- 1004: storage medium
- 1070: pcm encoder
- 1071: subsequent pcm detector
- 2031: subsequent pcm determination unit

## Claims

1. A video encoding device comprising:
transforming means for transforming an image block;
entropy encoding means for entropy encoding transformed data of the image block transformed by the transforming means;
PCM encoding means for PCM encoding the image block; and
multiplexed data selecting means for selecting any of output data of the entropy encoding means and output data of the PCM encoding means for each image block,
wherein the PCM encoding means embeds, at a beginning of PCM data, a subsequent_pcm_flag syntax indicating whether an image block of PCM data follows or not.

2. A video decoding device comprising:
demultiplexing means for demultiplexing a bitstream including a subsequent_pcm_flag syntax indicating whether an image block of PCM data follows or not;
PCM decoding means for PCM decoding the PCM data of the image block included in the bitstream;
entropy decoding means for entropy decoding transformed data of the image block included in the bitstream; and
decoding control means for, when a value of a subsequent_pcm_flag syntax of an image block immediately before an image block to be decoded is equal to 1, inhibiting the entropy decoding means from entropy decoding a PCM mode header of the image block to be decoded.

3. A video encoding method comprising:
transforming an image block, and entropy encoding transformed data of the transformed image block;
PCM encoding the image block by embedding, at a beginning of PCM data, a subsequent_pcm_flag syntax indicating whether an image block of PCM data follows or not; and
selecting any of entropy encoded output data and PCM encoded output data for each image block.

4. A video decoding method comprising:
demultiplexing a bitstream including a subsequent_pcm_flag syntax indicating whether an image block of PCM data follows or not;
PCM decoding the PCM data of the image block included in the bitstream;
entropy decoding transformed data of the image block included in the bitstream; and
when a value of a subsequent_pcm_flag syntax of an image block immediately before an image block to be decoded is equal to 1 upon the entropy decoding, inhibiting entropy-decoding a PCM mode header of the image block to be decoded.

5. A video encoding program which causes a computer to perform:
a transformation process of transforming an image block;
an entropy encoding process of entropy encoding transformed data of the image block transformed in the transformation process;
a PCM encoding process of PCM encoding the image block; and
a multiplexed data selection process of selecting any of output data generated in the entropy encoding process and output data generated in the PCM encoding process, for each image block,
wherein, in the PCM encoding process, the computer is caused to perform a process of embedding, at a beginning of PCM data, a subsequent_pcm_flag syntax indicating whether an image block of PCM data follows or not.

6. A video decoding program which causes a computer to perform:
a demultiplexing process of demultiplexing a bitstream including a subsequent_pcm_flag syntax indicating whether an image block of PCM data follows or not;
a PCM decoding process of PCM decoding the PCM data of the image block included in the bitstream;
an entropy decoding process of entropy decoding transformed data of the image block included in the bitstream; and
a decoding control process of, when a value of a subsequent_pcm_flag syntax of an image block immediately before an image block to be decoded is equal to 1, inhibiting the PCM decoding process from entropy decoding a PCM mode header of the image block to be decoded.
